# EUROPEAN PATENT APPLICATION

(11) **EP 0 909 059 A1**
(43) Date of publication of application: **14.04.1999**
(21) Application number: 97307912.2
(22) Date of filing: 07.10.1997
(51) Int. Cl.: H04L 12/26

(54) **Method and apparatus for the evaluation of protocol analyser data**

(71) Applicant: LUCENT TECHNOLOGIES INC., Murray Hill, New Jersey 07974-0636 (US)
(72) Inventor: Daniel, Wolfgang, 90408 Nürnberg (DE); Strobel, Michael, 91233 Rollhofen (DE); Schorcht, Gunar Bert, 98693 Ilmenau (DE)
(74) Representative: Funnell, Samantha Jane

(57) **Abstract**

The present invention generally relates to the field of protocol analysers and particularly to a method and apparatus for the evaluation of protocol analyser data, and in particular where protocol analyser data is made available from different protocol analysers.

For testing complex communication systems often a number of different protocol analysers is needed. Sometimes different protocol analysers of different suppliers are used for the same interface of the communications system that has to be analysed or evaluated. It also occurs that log-files of the message exchange of remotely located communication systems have to be analysed. In these cases it often happens, that the type of protocol analyser used for recording the log-file under consideration is not available at the location where the log-file should be analysed.

The invention describes a method and apparatus for the evaluation and analysis of protocol analyser data of different format. The analysis of data of different format is made possible by way of decoding all protocol analyser data and creating data of an intermediate format, which is uniform for all different types of protocol analyser data to be analysed. Subsequently the data of intermediate format is analysed and results are outputted.

## Description

### TECHNICAL FIELD

The present invention relates generally to the field of protocol analysers and particularly to a method and apparatus for the evaluation of protocol analyser data, and in particular where protocol analyser data is made available from different protocol analysers.

### BACKGROUND OF THE INVENTION

Protocol analysers or protocol monitors are devices which allow the recording of all kinds of data or messages exchanged between specified interfaces of distributed systems, e. g. communications systems which consist of a plurality of components. With protocol emulators or simulators, messages exchanged between the components of a system can be simulated. The recorded message exchanges are stored in a storage means and are usually called a log-file. Analysis of log-files may be used for the detection of errors, to prove compliance with predetermined rules or protocols, to test the compatibility of components or for testing the interoperability of different components. Analysis of the stored log-file data is usually made off-line, i. e. after a number of exchanged messages, sufficient for the requested analysis, have been stored. For analysing the log-file data, protocol analysers usually have a soft-ware package which allows, for example, visualisation of the messages exchanged, decoding of the exchanged messages and/or the comparison of the log-file with predetermined protocols. The quality and user-friendliness of the soft-ware differs considerably, usually decreasing with the specialisation of the protocol analysers.

For testing complex communications systems a number of different protocol analysers are often needed. Sometimes different protocol analysers from different suppliers are used to analyse the same interface of the communication system. Alternatively, the log-files of remotely located communications systems may be analysed. In these cases the type of protocol analyser used for recording the log-file under consideration may not be available at the location where the log-file is to be analysed.

The above mentioned test situations cause several problems with regard to the use of different protocol analysers as known from the state of art. One problem of protocol analysers as known from the state of the art is that it is not always possible to make available all the necessary types of protocol analysers. It is another problem that if different types of protocol analysers are used, the users have to be trained for all of these different types of protocol analysers. Yet another problem is that the functionality required for a specific analysis may not be supported by the available protocol analyser, and the functionality of known protocol analysers is usually fixed. It is a further problem of known protocol analysers that during the analysis the protocol analyser is off-line and the recording of messages exchanged and the creation of a log-file for a particular interface is blocked.

### SUMMARY OF THE INVENTION

Accordingly, it is an object of the present invention to provide a method and apparatus for the evaluation of protocol analyser data and, in particular, data from different protocol analysers. One aim of the invention is to avoid the drawbacks of the protocol analysers as known from the state of the art.

The method includes the steps of inputting the protocol analyser data, decoding the inputted protocol analyser data and producing data of an intermediate data format, analysing the data of intermediate format, and outputting the results of the analysis.

An apparatus includes means for inputting, storing, processing and outputting. The storing means is divided into storing areas for protocol analyser data, for decoding modules, for analysing modules, for intermediate data and for output data. The inputting means inputs the protocol analyser data and stores it in the storing means. The processing means selects the appropriate decoding module depending on the type of protocol analyser data. The processing means decodes the protocol analyser data with the selected decoding module and creates data of an intermediate format which is stored in the storing means. The processing means analyses the intermediate data with a predetermined module or modules of the analysing modules and stores the result of the analysis as output data in the storing means. The output data is outputted by the outputting means.

Another apparatus includes means for inputting, storing, processing and outputting. The storing means is divided into storing areas for decoding modules, for analysing modules, for intermediate data and for output data. The inputting means inputs the protocol analyser data. The processing means selects the appropriate decoding module depending on the type of protocol analyser data. The processing means decodes the protocol analyser data with the selected decoding module and creates data of an intermediate format which is stored in the storing means. The processing means analyses the intermediate data with a predetermined module or modules of the analysing modules and stores the result of the analysis as output data in the storing means. The output data is outputted by the outputting means.

An advantage of the present invention is that it allows the use of expensive measuring devices only for the purpose of capturing data. Another advantage of the present invention is that it allows the flexible evaluation of different types of protocol analyser data with a single method or apparatus, reducing the necessary training for the user and the cost of making available different types of protocol analysers.

The present invention will be more fully understood from the detailed description given hereinafter and further scope of applicability of the present invention will become apparent. However, it should be understood that the detailed description is given by way of illustration only, since various changes and modifications within the spirit and scope of the invention will become apparent to those skilled in the art.

### BRIEF DESCRIPTION OF THE DRAWINGS

The following detailed description is accompanied by drawings of which
- Fig. 1: is a schematic flow chart of a method for the evaluation of protocol analyser data according to this invention,
- Fig. 2: is a schematic representation of an embodiment of an apparatus for the evaluation of protocol analyser data according to this invention, and
- Fig. 3: is a schematic representation of another embodiment of an apparatus for the evaluation of protocol analyser data according to this invention.

Identical denotations in different Figures represent identical elements.

### DETAILED DESCRIPTION

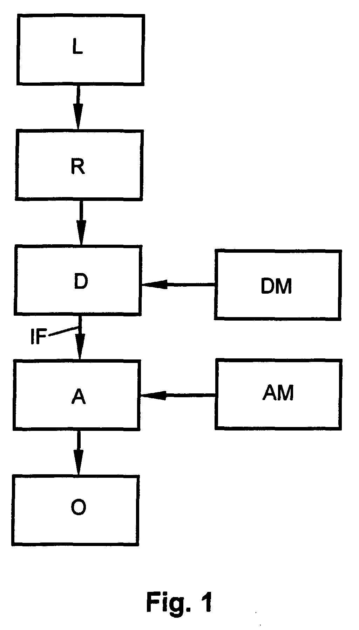

Depicted in Fig. 1 is a schematic flow chart of a method for the evaluation of protocol analyser data. It shows the protocol analyser data in the form of one or more log-files L, an inputting step R, to input in the log-file L, a decoding step D, which produces data IF of an intermediate format, an analysing step A and an outputting step O. It also shows decoding modules DM for the decoding step D and analysing modules AM for the analysing step A.

For the analysis and evaluation of protocol analyser data of any given format, originating from different types of protocol analysers, the log-file L of that data is inputted in the first step. The inputted log-file L is decoded in the second step D, wherein the appropriate decoding module DM is selected for the given format of the inputted log-file L. It is also possible to effect the decoding at the same time as data is input, i. e. the first step and the second step are effected in parallel. The selection of the appropriate decoding module DM is made possible through information, e. g. header information, which characterises the different formats of the log-files representing the inputted data originating from different types of protocol analysers. The decoding produces data of an intermediate data format IF which is evaluated or analysed in the third step A. Instead of an separate third step it is also possible to effect the second and the third step or the first, second and third steps in parallel. For the analysis different analysing modules AM are available. The kind of analysis has to be predetermined, i. e. the type of analysing module or modules AM has or have to be chosen. The results of the analysis are outputted O in a fourth step, e. g. in optical or acoustical form. It is also possible to output the results of the analysis in an electronically storable data file.

The decoding modules used for decoding of the inputted log-files originating from different types of protocol analysers in the second step can easily be derived from the different types of log-files, if their formats are known. It is then possible to decode all information contained in each log-file originating form any given type of protocol analyser to an intermediate format. After decoding the inputted log-files L of different format, the data IF of intermediate format is uniform for all inputted log-files.

The uniformity of the intermediate data IF in the intermediate format allows the analysis of all protocol analyser data with one set of analysing modules AM, regardless of the format of the different original log-files. The analysing modules AM represent the functionality of all of the used protocol analysers. All given analysing functions of the used protocol analysers are taken to create the analysing modules AM. On this basis each necessary function or analysing module AM has to be programmed. The available functions comprise, for example, the flow of the data and/or messages exchanged, statistics, time measurements and many others. It is also possible to create further analysing modules, which are not available from known protocol analysers.

It is an special advantage of the present invention that all analysing functions, no matter from what protocol analyser they originate, are available for all protocol analyser data no matter what format of log-file, because of the decoding of the log-files and the availability of data of uniform intermediate format and analysing modules for the data of intermediate format.

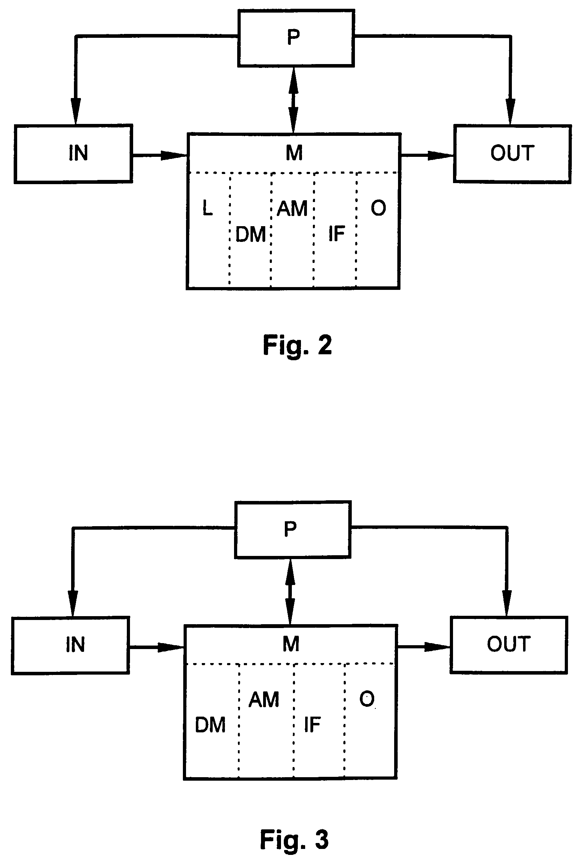

Depicted in Fig. 2 is an apparatus for the evaluation of protocol analyser data. It shows an input means IN, a storing means M, an output means OUT and a processing means P. The input means IN can be, for example, a floppy-disk reader, a keyboard or an data interface, e. g. a RS-232 interface or a combination thereof. The output means OUT can be a monitor, a printer, a loudspeaker, a storing means or such like or a combination thereof. The processing means P can be a microprocessor which controls the input means IN, the output means OUT, the storing means M and processes the data to be analysed. The storing means M can be a volatile or non-volatile memory, which is divided into different storing areas. There are areas for inputted log-files L, for decoding modules DM, for analysing modules AM, for data IF of intermediate format and for output data O. Any standard computer, a. g. a personal computer, may be used to build the apparatus for the evaluation of protocol analyser data as shown in Fig. 2.

In the area for decoding modules DM of the storing means M all decoding modules needed for the log-files that have to be analysed are stored. In the area for analysing modules AM of the storing means M all the analysing modules needed for the analysis to be carried out are stored. All the necessary decoding modules and analysing modules have to be made available and stored in the storing means before the start of analysis of log-files. As mentioned above, the decoding and analysing modules can easily be created, if the format of the log-files and the necessary analysis functions are known.

After any given log-file is inputted by the inputting means IN under the control of the processing means P, it is stored in the storing means M, in the area for log-files L. Subsequently the inputted and stored log-file L is decoded by the processing means P. For the decoding of any given log-file the matching decoding module from the stored decoding modules DM is selected by the processing means P. For this purpose it is, for example, possible to analyse header information contained in the log-file to identify the matching decoding module. The decoded log-file is stored in the storing means, area IF, in an intermediate format for later analysis.

Depicted in Fig. 3 is another embodiment of an apparatus for the evaluation of protocol analyser data. It comprises the same means as depicted in Fig. 2 and explained above. In difference to Fig. 2 storing means M is divided into areas for decoding modules DM, for analysing modules AM, for data in intermediate format IF and for output data O. Instead of inputting and storing the log-file that is to be analysed the log-file is decoded directly during inputting.

After decoding and creating data IF of intermediate format, data IF is analysed. The different analysing functions or modules stored in memory means M, area AM, can be selected or predetermined for the analysis, e. g. by using the keyboard of the input means IN. The processing means P then analyses data IF of intermediate format with the selected analysing module or modules AM and stores the results of the analysis in the storing means M, area O, for the output data.

The output data O is afterwards outputted by the output means OUT under the control of the processing means P. The output of the output data O can be visual, acoustical and/or a data file in electronically storable form.

## Claims

1. Method for the evaluation of protocol analyser data, whereat protocol analyser data is made available in particular from different protocol analysers, comprising steps of
- inputting the protocol analyser data,
- decoding the inputted protocol analyser data and producing data of an intermediate data format,
- analysing the data of intermediate data format, and
- outputting the results of the analysis.

2. Method according to claim 1,
**characterised in,**
that two or more of said steps of inputting, decoding and analysing are effected in parallel.

3. Method according to claim 1 or 2,
**characterised in,**
that a decoding module for each different type of protocol analyser data is made available and that the decoding module is selected automatically depending on the type of the inputted protocol analyser data.

4. Method according to claim 3,
**characterised in,**
that the type of inputted protocol analyser data is determined by analysing header information contained in the protocol analyser data.

5. Method according to any claim 1 to 4,
**characterised in,**
that the outputting comprises optical and/or acoustical output of the results of the analysis or the creation of a data file which contains the results.

6. Apparatus for the evaluation of protocol analyser data, whereat protocol analyser data is made available in particular from different protocol analysers, including a inputting means (IN), a storing means (M), a processing means (P), and a outputting means (OUT), wherein,
the storing means (M) is divided in storing areas for protocol analyser data (L), for decoding modules (DM), for analysing modules (AM), for intermediate data (IF) and for output data (O),
the inputting means (IN) inputs the protocol analyser data (L) and stores it in the storing means (M,L),
depending on the type of protocol analyser data (L) the processing means (P) selects the corresponding decoding module (DM),
the processing means (P) decodes the stored protocol analyser data (L) with the selected decoding module (DM) and creates data of an intermediate data format (IF) which is stored in the storing means (M,IF),
the processing means (P) analyses the intermediate data (IF) with a predetermined module or modules of the analysing modules (AM) and stores the results of the analysis as output data (O) in the storing means (M,O), and the output data is outputted by the outputting means (OUT).

7. Apparatus according to claim 6,
**characterised in,**
that the processing means (P) analyses header information contained in the protocol analyser data (L) to determine the type of protocol analyser data (L).

8. Apparatus for the evaluation of protocol analyser data, whereat protocol analyser data is made available in particular from different protocol analysers, including a inputting means (IN), a storing means (M), a processing means (P), and a outputting means (OUT), wherein,
the storing means (M) is divided in storing areas for decoding modules (DM), for analysing modules (AM), for intermediate data (IF) and for output data (O),
the inputting means (IN) inputs the protocol analyser data (L) while, depending on the type of protocol analyser data (L) the processing means (P) selects the corresponding decoding module (DM),
the processing means (P) decodes the inputted protocol analyser data (L) with the selected decoding module (DM) and creates data of an intermediate data format (IF) which is stored in the storing means (M,IF),
the processing means (P) analyses the intermediate data (IF) with a predetermined module or modules of the analysing modules (AM) and stores the results of the analysis as output data (O) in the storing means (M,O), and the output data is outputted by the outputting means (OUT).

9. Apparatus according to claim 8,
**characterised in,**
that the processing means (P) analyses header information contained in the protocol analyser data (L) to determine the type of protocol analyser data (L).
